(19) 

**Europäisches Patentamt**
**European Patent Office**
**Office européen des brevets**

(11) **EP 4 604 073 A1**

(12) **EUROPEAN PATENT APPLICATION**

(43) Date of publication:
20.08.2025 Bulletin 2025/34

(21) Application number: 24215375.7

(22) Date of filing: 26.11.2024

(51) International Patent Classification (IPC):
$G06V\ 10/25^{(2022.01)}$    $G06T\ 7/20^{(2017.01)}$
$G06V\ 10/62^{(2022.01)}$    $G06V\ 10/74^{(2022.01)}$
$G06V\ 10/80^{(2022.01)}$    $G06V\ 10/82^{(2022.01)}$
$G06V\ 20/52^{(2022.01)}$

(52) Cooperative Patent Classification (CPC):
G06V 10/82; G06T 7/20; G06T 7/246; G06V 10/25;
G06V 10/62; G06V 10/761; G06V 10/806;
G06V 20/52; G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 15.02.2024 KR 20240021872

(71) Applicant: **42dot Inc.**
**Seoul 06267 (KR)**

(72) Inventor: **JEONG, Seong Gyun**
**13532 Seongnam-si, GyeonggiGyeonggi-do (KR)**

(74) Representative: **Perronace, Andrea et al**
**Jacobacci & Partners S.p.A.**
**Via Tomacelli, 146**
**00186 Roma (IT)**

(54) **METHOD AND ELECTRONIC DEVICE FOR TRACKING MULTIPLE OBJECTS**

(57) An operating method of an electronic device, according to an example embodiment, may include detecting at least one object in a frame at a current time point. The operating method may include obtaining, using a neural network model, a matching result between the at least one detected object and at least one object tracked in frames at a previous time point that precedes the current time point, based on information about the at least one detected object, information about the at least one tracked object, a frame feature of the frame, and an object-recognized frame feature of the previous time point. The operating method may include obtaining trajectory information of the at least one detected object up to the current time point, based on the matching result.

FIG. 2

**EP 4 604 073 A1**

# EP 4 604 073 A1

**Description**

BACKGROUND

1. Field

The following description relates to a method of tracking multiple objects and an electronic device performing the method.

2. Description of Related Art

In computer vision, a crossing lies between object tracking and other techniques such as image processing, pattern recognition, and machine learning. Object tracking aims to automatically track and monitor the movement of objects in a video and is applicable in various technical fields including, for example, security, robotics, autonomous vehicles, and augmented reality (AR).

The main aspects of object tracking include object detection, motion analysis, feature extraction, concatenation algorithm, multi-object tracking, deep learning, and sensor fusion. Object tracking continues to evolve in line with technological advancements of deep learning, sensor fusion, and the like, playing an important role in various industries.

The above information is presented as background information (or related art) only to assist with an understanding of the present disclosure. No determination has been made, and no assertion is made, as to whether any of the above might be applicable as prior art with regard to the present disclosure.

SUMMARY

According to an example embodiment, there is provided an operating method of an electronic device. The operating method may include detecting at least one object in a frame at a current time point. The operating method may include obtaining, using a neural network model, a matching result between the at least one detected object and at least one object tracked in frames at a previous time point that precedes the current time point, based on information about the at least one detected object, information about the at least one tracked object, a frame feature of the frame, and an object-recognized frame feature of the previous time point. The operating method may include obtaining trajectory information of the at least one detected object up to the current time point, based on the matching result.

The neural network model may include a transformer configured to output an object-recognized frame feature of the current time point, based on the frame feature and the object-recognized frame feature of the previous time point. The neural network model may include a re-identification (ReID) embedding module configured to output a ReID feature of the at least one detected object, based on the object-recognized frame feature of the current time point and the object-recognized frame feature of the previous time point. The neural network model may include a motion estimation module configured to output a heatmap including information about a position estimated at the current time point for each of the at least one tracked object, based on the object-recognized frame feature of the current time point and the object-recognized frame feature of the previous time point. The neural network model may include a matching module configured to match the at least one detected object and the at least one tracked object, based on the information about the at least one tracked object, the information about the at least one detected object, the ReID feature, and the heatmap.

The transformer may obtain first feature matrices based on the object-recognized frame feature of the previous time point. The transformer may obtain a second feature matrix based on the frame feature. The transformer may output the object-recognized frame feature of the current time point, based on the first feature matrices, the second feature matrix, and the frame feature.

The transformer may obtain a first object feature by performing a region-of-interest alignment (ROI Align) on the at least one tracked object on the object-recognized frame feature of the previous time point. The transformer may obtain the first feature matrices based on the first object feature.

The transformer may obtain a fused object feature from the first feature matrices and the second feature matrix, based on a cross-attention layer. The transformer may output the object-recognized frame feature of the current time point, based on the fused object feature and the frame feature.

The ReID embedding module may obtain first feature matrices based on the object-recognized frame feature of the previous time point. The ReID embedding module may obtain a third feature matrix based on the object-recognized frame feature of the current time point. The ReID embedding module may output the ReID feature of the at least one detected object, based on the first feature matrices and the third feature matrix.

The ReID embedding module may obtain a second object feature by performing ROI Align on the at least one detected object on the object-recognized frame feature of the current time point. The ReID embedding module may obtain the third feature matrix based on the second object feature.

The motion estimation module may obtain a third object feature based on the object-recognized frame feature of the previous time point. The motion estimation module may obtain a fourth object feature based on the object-recognized frame feature of the current time point. The motion estimation module may output the heatmap based on the third object feature and the fourth object feature.

The motion estimation module may obtain the fourth object feature by performing ROI Align on a search region on the object-recognized frame feature of the current time point. The search region may be obtained by adjusting a scale of a bounding box of the at least one detected object.

The matching module may calculate a first similarity between the at least one tracked object and the at least one detected object, based on the ReID feature. The matching module may calculate a second similarity between the at least one tracked object and the at least one detected object, based on the information about the position estimated at the current time point for each of the at least one tracked object, the information included in the heatmap. The matching module may output the matching result based on a weighted sum of the first similarity and the second similarity.

The first similarity may be based on a bidirectional softmax similarity and cosine similarity between a ReID feature of the current time point and a ReID feature of the previous time point.

According to an example embodiment, there is provided an electronic device including a processor and a memory storing instructions. When executed by the processor, the instructions may cause the electronic device to detect at least one object in a frame at a current time point. When executed by the processor, the instructions may cause the electronic device to obtain, using a neural network model, a matching result between the at least one detected object and at least one object tracked in frames at a previous time point that precedes the current time point, based on information about the at least one detected object, information about the at least one tracked object, a frame feature of the frame, and an object-recognized frame feature of the previous time point. When executed by the processor, the instructions may cause the electronic device to obtain trajectory information of the at least one detected object up to the current time point, based on the matching result.

Other features and aspects will be apparent from the following detailed description, the drawings, and the claims.

BRIEF DESCRIPTION OF THE DRAWINGS

FIG. 1 is a block diagram schematically illustrating an electronic device according to an example embodiment.
FIG. 2 is a diagram illustrating a neural network according to an example embodiment.
FIG. 3 is a diagram illustrating an operation of a transformer according to an example embodiment.
FIG. 4 is a diagram illustrating an operation of a re-identification (ReID) embedding module according to an example embodiment.
FIG. 5 is a diagram illustrating an operation of a motion estimation module according to an example embodiment.
FIG. 6 is a diagram illustrating multi-object tracking in an autonomous driving system according to an example embodiment.
FIG. 7 is a flowchart illustrating an operating method of an electronic device according to an example embodiment.

DETAILED DESCRIPTION

The following structural or functional descriptions of example embodiments are merely intended for the purpose of describing the example embodiments, and the example embodiments may be implemented in various forms. The example embodiments are not meant to be limited, but it is intended that various modifications, equivalents, and alternatives are also covered within the scope of the claims.

Although terms such as "first" or "second" are used to explain various components, the components are not limited to the terms. These terms should be used only to distinguish one component from another component. For example, a "first" component may be referred to as a "second" component, or similarly, and the "second" component may be referred to as the "first" component within the scope of the right according to the concept of the present disclosure.

It will be understood that when a component is referred to as being "connected to" another component, the component can be directly connected or coupled to the other component, or intervening components may be present.

As used herein, "A or B," "at least one of A and B," "at least one of A or B," "A, B or C," "at least one of A, B and C," and "A, B, or C," each of which may include any one of the items listed together in the corresponding one of the phrases, or all possible combinations thereof. The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Unless otherwise defined, all terms used herein including technical or scientific terms have the same meanings as those generally understood consistent with and after an understanding of the present disclosure. Terms, such as those defined in commonly used dictionaries, should be construed to have meanings matching with contextual meanings in the relevant art and the present disclosure, and are not to be construed as an ideal or excessively formal meaning unless otherwise defined herein.

As used in connection with various example embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an example embodiment, the module may be implemented in the form of an application-specific integrated circuit (ASIC).

As used herein, the term "unit" (or "-er/or") refers to a software or hardware component such as a field-programmable gate array (FPGA) or an ASIC, and the unit may perform some functions. However, the unit is not limited to software or hardware. The unit may be configured to be on an addressable storage medium or may be configured to operate one or more processors. For example, the unit may include components, such as, software components, object-oriented software components, class components, and task components, processes, functions, attributes, procedures, subroutines, segments of program code, drivers, firmware, microcode, circuits, data, databases (DBs), data structures, tables, arrays, and variables. The functionality provided within components and units may be combined into fewer components and units or further separated into additional components and units. Further, the components and units may be implemented to operate one or more central processing units (CPUs) in a device or security multimedia card. Furthermore, the unit may include one or more processors.

Hereinafter, example embodiments will be described in detail with reference to the accompanying drawings. When describing the example embodiments with reference to the accompanying drawings, like reference numerals refer to like components and a repeated description related thereto is omitted.

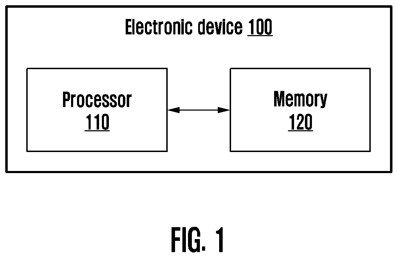

FIG. 1 is a block diagram schematically illustrating an electronic device according to an example embodiment.

According to an example embodiment, an electronic device 100 may track multiple objects. The electronic device 100 may use a neural network to track the multiple objects. A neural network model used by the electronic device 100 may use both an external appearance of an object and a motion of the object. The electronic device 100 may accurately track a plurality of objects with varying motions and/or similar appearances.

The neural network model used by the electronic device 100 may refer to a model in which artificial neurons (nodes) formed into a network by the coupling of synapses are trained to change the strength of the synaptic coupling through learning, resulting in problem-solving capabilities.

The neurons in the neural network may include any combination of weights or biases. The neural network may include one or more layers each including one or more neurons or nodes. The neural network may infer an outcome that is desired to be predicted from an arbitrary input by varying the weights of the neurons through learning.

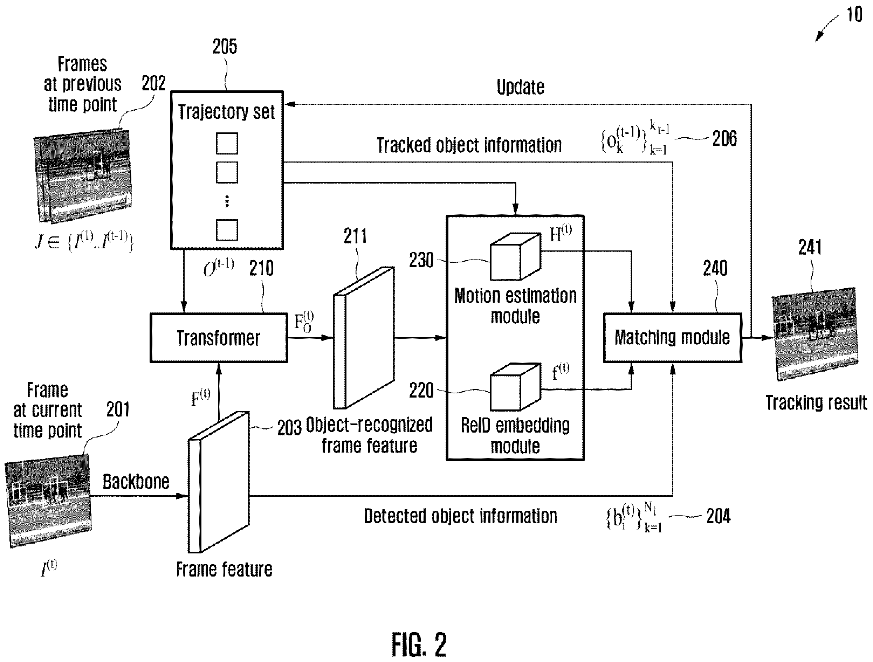

The neural network may include a deep neural network (DNN). The neural network may include, for example, a convolutional neural network (CNN), a recurrent neural network (RNN), a perceptron, a multilayer perceptron, a feedforward (FF) network, a radial basis function (RBF) network, a deep feedforward (DFF) network, a long short-term memory (LSTM), a gated recurrent unit (GRU), an autoencoder (AE), a variational autoencoder (VAE), a denoising autoencoder (DAE), a sparse autoencoder (SAE), a Markov chain (MC), a Hopfield network (HN), a Boltzmann machine (BM), a restricted Boltzmann machine (RBM), a deep belief network (DBN), a deep convolutional network (DCN), a deconvolutional network (DN), a deep convolutional inverse graphics network (DC-IGN), a generative adversarial network (GAN), a liquid state machine (LSM), an extreme learning machine (ELM), an echo state network (ESN), a deep residual network (DRN), a differentiable neural computer (DNC), a neural Turing machine (NTM), a capsule network (CN), a Kohonen network (KN), or an attention network (AN). The structure of the neural network used by the electronic device 100 will be described in detail below with reference to FIGS. 2 through 5.

The electronic device 100 may be implemented within a personal computer (PC), a data server, or a portable device.

The portable device may be implemented as, for example, a laptop computer, a mobile phone, a smartphone, a tablet PC, a mobile Internet device (MID), a personal digital assistant (PDA), an enterprise digital assistant (EDA), a digital still camera, a digital video camera, a portable multimedia player (PMP), a personal navigation device or portable navigation device (PND), a handheld game console, an e-book, or a smart device. The smart device may be implemented as, for example, a smart watch, a smart band, or a smart ring.

Referring to FIG. 1, the electronic device 100 may include a processor 110 and a memory 120.

The processor 110 may process data stored in the memory 120. The processor 110 may execute computer-readable code (e.g., software) and instructions stored in the memory 120.

The processor 110 may be a hardware-implemented data processing device with physically structured circuitry for executing desired operations. The processor 110 may perform the desired operations by executing code or instructions included in a program.

The hardware-implemented data processing device may include, for example, a microprocessor, a central processing unit (CPU), a processor core, a multi-core processor, a multiprocessor, an application-specific integrated circuit (ASIC), or a field-programmable gate array (FPGA).

The memory 120 may be implemented as a volatile memory device or a non-volatile memory device.

The volatile memory device may be implemented as, for example, a dynamic random-access memory (DRAM), a static RAM (SRAM), a thyristor RAM (T-RAM), a zero capacitor RAM (Z-RAM), or a twin transistor RAM (TTRAM).

The non-volatile memory device may be implemented as, for example, an electrically erasable programmable read-only memory (EEPROM), a flash memory, a magnetic RAM (MRAM), a spin-transfer torque MRAM (STT-MRAM), a conductive bridging RAM (CBRAM), a ferroelectric RAM (FeRAM), a phase-change RAM (PRAM), a resistive RAM (RRAM), a nanotube RRAM, a polymer RAM (PoRAM), a nano-floating gate memory (NFGM), a holographic memory, a molecular electronic memory device, or an insulator resistance change memory.

The processor 110 may detect an object in a frame (e.g., an image frame) at a current time point.

Using the neural network model, the processor 110 may obtain a matching result between the detected object and a tracked object in frames at a previous time point that precedes the current time point, based on information about the detected object, information about the tracked object, a frame feature of the frame, and an object-recognized frame feature of the previous time point.

The processor 110 may obtain trajectory information of the detected object up to the current time point, based on the matching result.

FIG. 2 is a diagram illustrating a neural network according to an example embodiment.

Referring to FIG. 2, shown is a neural network model 10 used by an electronic device (e.g., the electronic device 100 of FIG. 1) according to an example embodiment. The neural network model 10 may be used to obtain a set of tracks (or a trajectory set $O^{(t)}$ up to a time point t) of objects included in frames (e.g., a frame 201 of a current time point (e.g., the time point t) and frames 202 of a previous time point (e.g., a time point that precedes the time point t). The neural network model 10 may be used to update a trajectory set $O^{(t-1)}$ 205 to the trajectory set $O^{(t)}$.

The neural network model 10 may obtain trajectory information (e.g., a tracking result $o^{(t)}$ 241) about a track (or trajectory) of an object detected in the frame 201 of the current time point, up to the current time point, based on the frame 201 of the current time point and the frames 202 of the previous time point. The neural network model 10 may match the object detected in the frame 201 of the current time point and an object tracked in the frames 202 of the previous time point. Based on a result of the matching (or simply a "matching result" herein), the electronic device 100 may obtain the trajectory information (e.g., the tracking result $o^{(t)}$ 241).

The electronic device 100 may update the trajectory set $O^{(t-1)}$ 205 to the trajectory set $O^{(t)}$ based on the trajectory information (e.g., the tracking result $o^{(t)}$ 241).

The neural network model 10 may obtain the matching result between the detected object and the tracked object, based on information (e.g., $\left\{ \mathbf{b}_i^{(t)} \right\}_{i=1}^{N_t}$) 204 about the object detected in the frame 201 at the current time point, information (e.g., $\left\{ \mathbf{o}_k^{(t-1)} \right\}_{k=1}^{K_{t-1}}$) 206 about the object tracked in the frames 202 at the previous time point, a frame feature $F^{(t)}$ 203 of the frame 201 of the current time point, and an object-recognized frame feature (e.g., $\mathbf{F}_O^{(t-1)}$) of the previous time point.

The information $\left\{ \mathbf{b}_i^{(t)} \right\}_{i=1}^{N_t}$ 204 about the detected object in the frame 201 of the current time may be provided in the form of a bounding box. The information $\left\{ \mathbf{b}_i^{(t)} \right\}_{i=1}^{N_t}$ 204 about the detected object may be obtained from the frame 201 of the current time point by an object detector (not shown). In the information $\left\{ \mathbf{b}_i^{(t)} \right\}_{i=1}^{N_t}$ 204 about the detected object, a subscript may denote an index to an object and a superscript may denote an index to a time point.

The information $\left\{ \mathbf{o}_k^{(t-1)} \right\}_{k=1}^{K_{t-1}}$ 206 about the tracked object in the frames 202 of the previous time point may be the trajectory information (e.g., trajectory information in which corresponding bounding boxes are linked). The

information $\left\{\mathbf{o}_k^{(t-1)}\right\}_{k=1}^{K_{t-1}}$ 206 about the tracked object may be obtained at a time point (e.g., a time point t-1) immediately preceding the current time point (e.g., a time point t). The information $\left\{\mathbf{o}_k^{(t-1)}\right\}_{k=1}^{K_{t-1}}$ 206 about the tracked object may be trajectory information of an object detected in a frame of an immediately previous time point, up to the immediately previous time point.

The frame feature $F^{(t)}$ 203 of the frame 201 of the current time point may be a feature map. The frame feature $F^{(t)}$ 203 may be obtained from the frame 201 of the current time point by a backbone network of the object detector (not shown). The object detector (not shown), which outputs the frame feature $F^{(t)}$ 203 and the information $\left\{\mathbf{b}_i^{(t)}\right\}_{i=1}^{N_t}$ 204 about the detected object based on the frame 201 of the current time point, may be implemented within the neural network model 10 or may be implemented outside the neural network model 10.

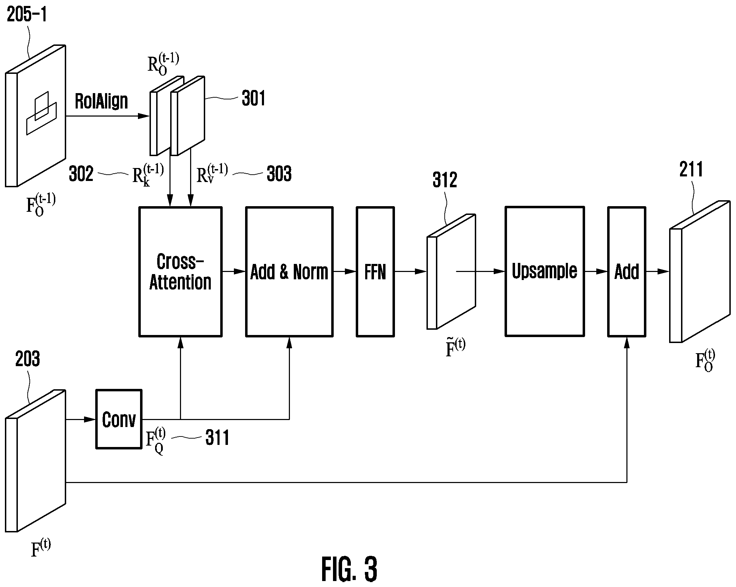

The object-recognized frame feature $\mathbf{F}_O^{(t-1)}$ (e.g., $\mathbf{F}_O^{(t-1)}$ 205-1 of FIG. 3) of the previous time point may be a feature map including information about an object on a frame. The object-recognized frame feature $\mathbf{F}_O^{(t-1)}$ of the previous time point may be obtained by a transformer 210 at an immediately previous time point (e.g., the time point t-1). The object-recognized frame feature $\mathbf{F}_O^{(t-1)}$ of the previous time point may be included in the trajectory set $O^{(t-1)}$ 205. The frame feature $F^{(t)}$ 203 and an object-recognized frame feature $\mathbf{F}_O^{(t)}$ 211 may be distinguished by a subscript O.

The neural network model 10 may include the transformer 210, a re-identification (ReID) embedding module 220, a motion estimation module 230, and a matching module 240.

The transformer 210 may be a temporal transformer. The transformer 210 may transfer (or transition) an object feature (e.g., an object feature included in the trajectory set $O^{(t-1)}$ 205) obtained in the frames 202 of the previous time point to the frame feature $F^{(t)}$ 203 of the frame 201 of the current time point. The transformer 210 may output the object-recognized frame feature $\mathbf{F}_O^{(t)}$ 211 of the current time point. The structure and operations of the transformer 210 will be described in more detail with reference to FIG. 3.

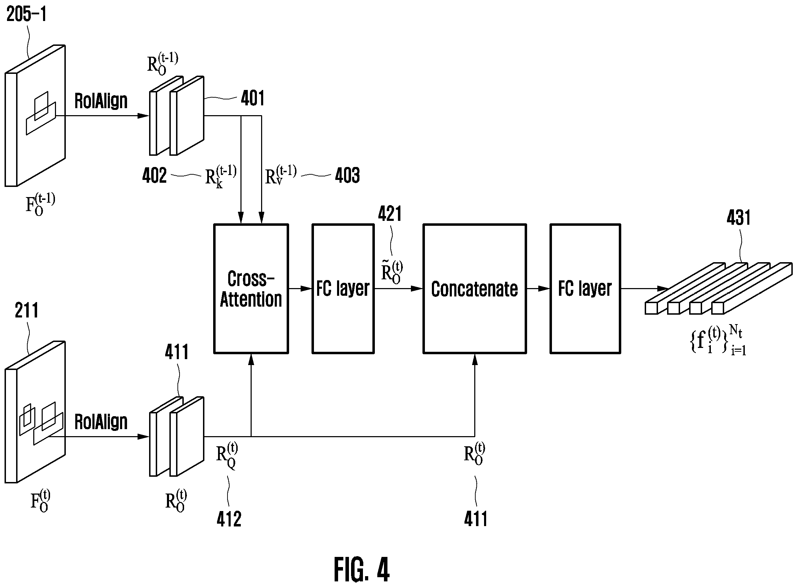

The ReID embedding module 220 may extract an external feature of an object. The ReID embedding module 220 may output a ReID feature $f^{(t)}$ of the object detected in the frame 201 of the current time point. The ReID embedding module 220 may output the ReID feature $f^{(t)}$ of the detected object, based on the object-recognized frame feature $\mathbf{F}_O^{(t)}$ 211 of the current time point and the object-recognized frame feature $\mathbf{F}_O^{(t-1)}$ of the previous time point. The structure and operations of the ReID embedding module 220 will be described in more detail with reference to FIG. 4.

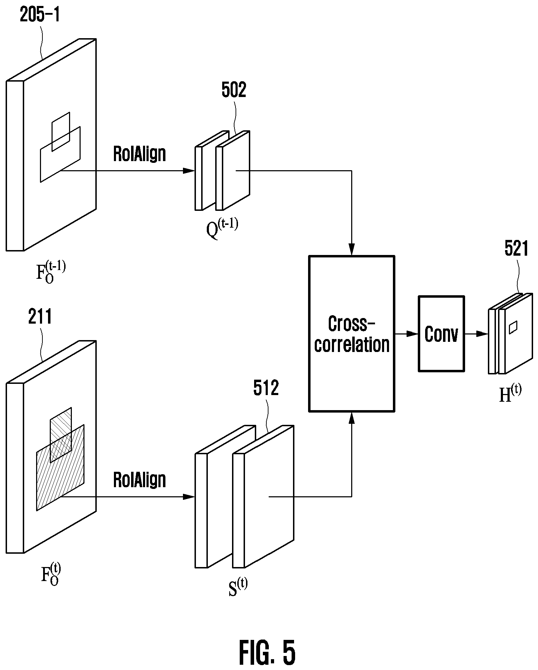

The motion estimation module 230 may estimate a motion of an object. The motion estimation module 230 may estimate a position at the current time point for each object tracked in the frames 202 at the previous time point. The motion estimation module 230 may output a heatmap $H^{(t)}$ based on the object-recognized frame feature $\mathbf{F}_O^{(t)}$ 211 of the current time point and the object-recognized frame feature $\mathbf{F}_O^{(t-1)}$ of the previous time point. The heatmap $H^{(t)}$ may include information about the position estimated at the current time point for each tracked object. The structure and operations of the motion estimation module 230 will be described in more detail with reference to FIG. 5.

The matching module 240 may associate an external feature of an object with an estimated motion of the object. The matching module 240 may match the detected object and the tracked object. The matching module 240 may match the detected object and the tracked object, based on the information $\left\{\mathbf{o}_k^{(t-1)}\right\}_{k=1}^{K_{t-1}}$ 206 about the tracked object, the information $\left\{\mathbf{b}_i^{(t)}\right\}_{i=1}^{N_t}$ 204 about the detected object, the ReID feature $f^{(t)}$, and the heatmap $H^{(t)}$.

Based on a result of the matching (or simply a "matching result" herein), the electronic device 100 may obtain the trajectory information (e.g., the tracking result o$^{(t)}$ 241) about a track up to the current time point of the object detected in the frame 201 at the current time point. The electronic device 100 may update the trajectory set O$^{(t-1)}$ to the trajectory set O$^{(t)}$ based on the trajectory information (e.g., the tracking result o$^{(t)}$ 241).

FIG. 3 is a diagram illustrating an operation of a transformer according to an example embodiment.

Referring to FIG. 3, shown is a structure of a transformer (e.g., the transformer 210 of FIG. 2) according to an example embodiment. The transformer 210 may output an object-recognized frame feature $\mathbf{F}_O^{(t)}$ 211 of a current time point based on a frame feature F$^{(t)}$ 203 of a frame of the current time point and an object-recognized frame feature $\mathbf{F}_O^{(t-1)}$ 205-1 of a previous time point.

The transformer 210 may obtain first feature matrices $\mathbf{R}_K^{(t-1)}$ 302 and $\mathbf{R}_V^{(t-1)}$ 303 based on the object-recognized frame feature $\mathbf{F}_O^{(t-1)}$ 205-1 of the previous time point.

First, the transformer 210 may obtain a first object feature (e.g., $\{\phi(\mathbf{o}_k^{(t-1)})\}_{k=1}^{K_{t-1}}$ ) by performing a region-of-interest alignment (ROI Align) on a tracked object on the object-recognized frame feature $\mathbf{F}_O^{(t-1)}$ 205-1 of the previous time point. The transformer 210 may concatenate the obtained first object features to obtain a feature matrix $\mathbf{R}_O^{(t-1)}$ 301. The feature matrix $\mathbf{R}_O^{(t-1)}$ 301 may be expressed as Equation 1.

[Equation 1]

$$\mathbf{R}_O^{(t-1)} = \left[\phi(\mathbf{o}_1^{(t-1)}), \ldots, \phi(\mathbf{o}_{K_{t-1}}^{(t-1)})\right]^T$$

The transformer 210 may obtain the first feature matrices $\mathbf{R}_K^{(t-1)}$ 302 and $\mathbf{R}_V^{(t-1)}$ 303 from the feature matrix $\mathbf{R}_O^{(t-1)}$ 301 based on a fully-connected (FC) layer.

The transformer 210 may obtain a second feature matrix $\mathbf{F}_Q^{(t)}$ 311 based on the frame feature F$^{(t)}$ 203. The transformer 210 may obtain the second feature matrix $\mathbf{F}_Q^{(t)}$ 311 from the frame feature F$^{(t)}$ 203 based on a 3x3 convolutional layer with a stride value of 4 and the FC layer.

Based on the first feature matrices $\mathbf{R}_K^{(t-1)}$ 302 and $\mathbf{R}_V^{(t-1)}$ 303, the second feature matrix $\mathbf{F}_Q^{(t)}$ 311, and the frame feature F$^{(t)}$ 203, the transformer 210 may output the object-recognized frame feature $\mathbf{F}_O^{(t)}$ 211 of the current time point.

The transformer 210 may obtain a fused object feature F̃$^{(t)}$ 312 from the first feature matrices $\mathbf{R}_K^{(t-1)}$ 302 and $\mathbf{R}_V^{(t-1)}$ 303 and the second feature matrix $\mathbf{F}_Q^{(t)}$ 311 based on a cross-attention layer (e.g., a multi-head cross-attention (MCA) layer). The fused object feature F̃$^{(t)}$ 312 may be obtained as expressed in Equation 2.

[Equation 2]

$$\tilde{\mathbf{F}}^{(t)} = \text{FFN}(\text{Norm}(\mathbf{F}_Q^{(t)} + \text{MCA}(\mathbf{F}_Q^{(t)}, \mathbf{R}_K^{(t-1)}, \mathbf{R}_V^{(t-1)})))$$

In Equation 2, FFN may denote a feed-forward network including two FC layers.

Based on the fused object feature $\tilde{F}^{(t)}$ 312 and the frame feature $F^{(t)}$ 203, the transformer 210 may output the object-recognized frame feature $\mathbf{F}_{O}^{(t)}$ 211 of the current time point.

The object-recognized frame feature $\mathbf{F}_{O}^{(t)}$ 211 of the current time point may be obtained as expressed in Equation 3.

[Equation 3]

$$\mathbf{F}_{O}^{(t)} = \mathbf{F}^{(t)} + \text{Upsample}(\tilde{\mathbf{F}}^{(t)})$$

As described above, the transformer 210, which is a temporal transformer, may output the object-recognized frame feature $\mathbf{F}_{O}^{(t)}$ 211 of the current time point. The object-recognized frame feature $\mathbf{F}_{O}^{(t)}$ 211 of the current time point may be obtained as an object feature (e.g., the object-recognized frame feature $\mathbf{F}_{O}^{(t-1)}$ 205-1 of the previous time point included in a trajectory set $O^{(t-1)}$) obtained from frames of the previous time point is transferred (or transitioned) to the frame feature $F^{(t)}$ 203 of the frame of the current time point.

FIG. 4 is a diagram illustrating an operation of a ReID embedding module according to an example embodiment.

Referring to FIG. 4, shown is a structure of a ReID embedding module (e.g., the ReID embedding module 220 of FIG. 2) according to an example embodiment. The ReID embedding module 220 may output a ReID feature (e.g., $\left\{\mathbf{f}_{i}^{(t)}\right\}_{i=1}^{N_t}$ ) 431 of an object detected in a frame at a current time point, based on an object-recognized frame feature $\mathbf{F}_{O}^{(t)}$ 211 of the current time point and an object-recognized frame feature $\mathbf{F}_{O}^{(t-1)}$ 205-1 of a previous time point.

The ReID embedding module 220 may obtain first feature matrices $\mathbf{R}_{K}^{(t-1)}$ 402 and $\mathbf{R}_{V}^{(t-1)}$ 403 based on the object-recognized frame feature $\mathbf{F}_{O}^{(t-1)}$ 205-1 of the previous time point. The operation of obtaining the first feature matrices $\mathbf{R}_{K}^{(t-1)}$ 402 and $\mathbf{R}_{V}^{(t-1)}$ 403 is substantially similar to the operation performed by a transformer (e.g., the transformer 210 of FIG. 2) to obtain the first feature matrices $\mathbf{R}_{K}^{(t-1)}$ 302 and $\mathbf{R}_{V}^{(t-1)}$ 303 described above with reference to FIG. 3 and will not be described in more detail here. The ReID embedding module 220 may obtain a feature matrix $\mathbf{R}_{O}^{(t-1)}$ 401 through Equation 1 described above and may obtain the first feature matrices $\mathbf{R}_{K}^{(t-1)}$ 402 and $\mathbf{R}_{V}^{(t-1)}$ 403 based on the feature matrix $\mathbf{R}_{O}^{(t-1)}$ 401.

The ReID embedding module 220 may obtain a third feature matrix $\mathbf{R}_{Q}^{(t)}$ 412 based on the object-recognized frame feature $\mathbf{F}_{O}^{(t)}$ 211 of the current time point.

The ReID embedding module 220 may obtain a second object feature $\left\{\varphi(\mathbf{b}_{i}^{(t)})\right\}_{i=1}^{N_t}$ by performing ROI Align on the detected object on the object-recognized frame feature $\mathbf{F}_{O}^{(t)}$ 211 of the current time point. The ReID embedding module 220 may concatenate the obtained second object features $\{\varphi(\mathbf{b}_i^{(t)})\}_{i=1}^{N_t}$ to obtain a feature matrix $\mathbf{R}_O^{(t)}$ 411. The feature matrix $\mathbf{R}_O^{(t)}$ 411 may be expressed as Equation 4.

[Equation 4]

$$\mathbf{R}_O^{(t)} = [\varphi(\mathbf{b}_1^{(t)}), \ldots, \varphi(\mathbf{b}_{N_t}^{(t)})]^T$$

The ReID embedding module 220 may obtain the third feature matrix $\mathbf{R}_Q^{(t)}$ 412 based on the feature matrix $\mathbf{R}_O^{(t)}$ 411. The third feature matrix $\mathbf{R}_Q^{(t)}$ 412 may be a result of projecting the feature matrix $\mathbf{R}_O^{(t)}$ 411 into a query.

The ReID embedding module 220 may obtain a fused feature matrix $\tilde{\mathbf{R}}_O^{(t)}$ 421 based on the first feature matrices 402 and 403 and the third feature matrix i $\mathbf{R}_Q^{(t)}$ 412. The ReID embedding module 220 may obtain the fused feature matrix $\tilde{\mathbf{R}}_O^{(t)}$ 421 based on a cross-attention layer (e.g., an MCA layer) and an FC layer. The fused feature matrix $\tilde{\mathbf{R}}_O^{(t)}$ 421 may be an updated version of the feature matrix $\mathbf{R}_O^{(t)}$ 411.

The ReID embedding module 220 may output a ReID feature (e.g., $\{\mathbf{f}_i^{(t)}\}_{i=1}^{N_t}$) 431 of the object detected in the frame at the current time point, based on the fused feature matrix $\tilde{\mathbf{R}}_O^{(t)}$ 421 and the feature matrix $\mathbf{R}_O^{(t)}$ 411. The ReID feature $\{\mathbf{f}_i^{(t)}\}_{i=1}^{N_t}$ 431 may be obtained as the fused feature matrix $\tilde{\mathbf{R}}_O^{(t)}$ 421 and the feature matrix $\mathbf{R}_O^{(t)}$ 411 are sequentially passed through a concatenate layer and the FC layer.

As described above, the ReID embedding module 220 may output the ReID feature $\{\mathbf{f}_i^{(t)}\}_{i=1}^{N_t}$ 431 of the object detected in the frame at the current time point. The ReID feature $\{\mathbf{f}_i^{(t)}\}_{i=1}^{N_t}$ 431 may relate to an external feature of the object.

FIG. 5 is a diagram illustrating an operation of a motion estimation module according to an example embodiment.
Referring to FIG. 5, shown is a structure of a motion estimation module (e.g., the motion estimation module 230 of FIG. 2) according to an example embodiment.
The motion estimation module 230 may output a heatmap $H^{(t)}$ 521 based on an object-recognized frame feature $\mathbf{F}_O^{(t)}$ 211 of a current time point and an object-recognized frame feature $\mathbf{F}_O^{(t-1)}$ 205-1 of a previous time point. The heatmap $H^{(t)}$ 521 may include information about a position that is estimated at the current time point for each object tracked in frames of the previous time point.
The motion estimation module 230 may obtain a third object feature $Q^{(t-1)}$ 502 based on the object-recognized frame feature $\mathbf{F}_O^{(t-1)}$ 205-1 of the previous time point. The third object feature $Q^{(t-1)}$ 502 may be a result of applying ROI Align to trajectory information $\mathbf{o}_k^{(t-1)}$ on the object-recognized frame feature $\mathbf{F}_O^{(t-1)}$ 205-1 of the previous time point.

The motion estimation module 230 may obtain a fourth object feature $S^{(t)}$ 512 based on the object-recognized frame feature $\mathbf{F}_O^{(t)}$ 211 of the current time point. The fourth object feature $S^{(t)}$ 512 may be a result of performing ROI Align on a search region on the object-recognized frame feature $\mathbf{F}_O^{(t)}$ 211 of the current time point. The search region may be a region obtained by adjusting a scale of a bounding box of a detected object. For example, the search region may be an extension of the bounding box of the detected object, based on a scale factor of 3.

The motion estimation module 230 may output the heatmap $H^{(t)}$ 521 based on the third object feature $Q^{(t-1)}$ 502 and the fourth object feature $S^{(t)}$ 512. The heatmap $H^{(t)}$ 521 may be calculated as expressed in Equation 5.

[Equation 5]

$$\mathbf{H}_k^{(t)} = \mathrm{Conv}(\mathbf{S}_k^{(t)} * \mathbf{Q}_k^{(t-1)}) \in \mathbb{R}^{31 \times 31}$$

In Equation 5, a subscript k may denote an index to an object, and a superscript t may denote an index to a time point. The motion estimation module 230 may allow the third object feature $Q^{(t-1)}$ 502 and the fourth object feature $S^{(t)}$ 512 to pass through a cross-correlation layer and a 3x3 convolutional layer including a rectified linear unit (ReLU) layer, sequentially. The heatmap $H^{(t)}$ 521 resulted therefrom may include information about a position that is estimated at the current time point for each object (e.g., $\left\{ \mathbf{o}_k^{(t-1)} \right\}_{k=1}^{K_{t-1}}$ ) tracked in frames at the previous time point.

Based on the heatmap $H^{(t)}$ 521, the motion estimation module 230 may obtain the position (e.g., $\left\{ \tilde{\mathbf{c}}_k^{(t)} \right\}_{k=1}^{K_{t-1}}$ , where $\tilde{\mathbf{c}}_k^{(t)} = [\tilde{x}_k^{(t)}, \tilde{y}_k^{(t)}]^T$ ) estimated at the current time point for each object (e.g., $\left\{ \mathbf{o}_k^{(t-1)} \right\}_{k=1}^{K_{t-1}}$ ) tracked in the frames at the previous time point.

As described above, the motion estimation module 230 may estimate the position at the current time point for each object tracked in the frames at the previous time point. The motion estimation module 230 may estimate a motion of the object.

A matching module (e.g., the matching module 240 of FIG. 2) may associate an external feature of an object (e.g., an output of the ReID embedding module 220 of FIG. 2) with an estimated motion of the object (e.g., an output of the motion estimation module 230 of FIG. 2). The matching module 240 may match the detected object and the tracked object. The matching module 240 may match the detected object and the tracked object, based on information about the tracked object (e.g., the information $\left\{ \mathbf{o}_k^{(t-1)} \right\}_{k=1}^{K_{t-1}}$ 206 of FIG. 2), information about the detected object (e.g., the information $\left\{ \mathbf{b}_i^{(t)} \right\}_{i=1}^{N_t}$ 204 of FIG. 2), a ReID feature (e.g., an output $f^{(t)}$ of the ReID embedding module 220 of FIG. 2), and a heatmap (e.g., an output $H^{(t)}$ of the motion estimation module 230 of FIG. 2).

The matching module 240 may output a matching result based on a weighted sum of a first similarity (e.g., $S_a$) related to an external similarity (or appearance similarity) and a second similarity (e.g., $S^m$) related to a motion-based similarity.

First, the matching module 240 may calculate the first similarity $S_a$ between the tracked object and the detected object based on the ReID feature. The first similarity $S_a$ may be calculated as expressed in Equation 6.

[Equation 6]

$$S_a(o_k^{(t-1)}, b_i^{(t)}) = \frac{S_b(f_k^{(t-1)}, f_i^{(t)}) + S_c(f_k^{(t-1)}, f_i^{(t)})}{2}$$

$$S_b(f_k^{(t-1)}, f_i^{(t)}) = \frac{1}{2}\left[\frac{\exp(f_k^{(t-1)} \cdot f_i^{(t)})}{\sum_{k=1}^{K_{t-1}} \exp(f_k^{(t-1)} \cdot f_i^{(t)})} + \frac{\exp(f_k^{(t-1)} \cdot f_i^{(t)})}{\sum_{i=1}^{N_t} \exp(f_k^{(t-1)} \cdot f_i^{(t)})}\right]$$

$$S_c(f_k^{(t-1)}, f_i^{(t)}) = \frac{f_k^{(t-1)} \cdot f_i^{(t)}}{\|f_k^{(t-1)}\|\|f_i^{(t)}\|}$$

In Equation 6, $o_k^{(t-1)}$ may denote information about an object tracked at a previous time point, and $b_i^{(t)}$ may denote information about an object detected at a current time point. $S_b$ may denote a bidirectional softmax similarity, $f_k^{(t-1)}$ may denote a ReID feature of the previous time point, $f_i^{(t)}$ may denote a ReID feature of the current time point, and $S_c$ may denote a cosine similarity.

The matching module 240 may then calculate the second similarity $S_m$ between the tracked object and the detected object based on the heatmap $H^{(t)}$. Based on the heatmap $H^{(t)}$, the matching module 240 may obtain a position that is estimated at the current time point for each tracked object. The matching module 240 may calculate the second similarity $S_m$ between the tracked object and the detected object based on the position estimated at the current time for each tracked object. The second similarity $S_m$ may be calculated as expressed in Equation 7.

[Equation 7]

$$S_m(o_k^{(t-1)}, b_i^{(t)}) = \exp\left(\frac{-\|\tilde{c}_k^{(t)} - c_i^{(t)}\|_2}{\alpha}\right)$$

In Equation 7, $o_k^{(t-1)}$ may denote information about an object tracked at a previous time point, and $b_i^{(t)}$ may denote information about an object detected at a current time point. $\tilde{c}_k^{(t)}$ may denote a position estimated at the current time point for each tracked object, $c_i^{(t)}$ may denote a center position of $b_i^{(t)}$, and $\alpha$ may denote a hyperparameter.

The matching module 240 may calculate the weighted sum (e.g., a concatenated similarity S) of the first similarity $S_a$ related to the external similarity and the second similarity $S_m$ related to the motion-based similarity. The concatenated similarity S may be calculated as expressed in Equation 8.

[Equation 8]

$$S(o_k^{(t-1)}, b_i^{(t)}) = S_a(o_k^{(t-1)}, b_i^{(t)}) + \beta \cdot S_m(o_k^{(t-1)}, b_i^{(t)})$$

In Equation 8, $\beta$ may denote a weight parameter.

The matching module 240 may obtain the matching result between the detected object and the tracked object based on the concatenated similarity S. The matching module 240 may match the detected object and the tracked object as a pair, with a greatest concatenated similarity. For example, in a case where an i-th detected object $b_i^{(t)}$ is matched to a k-th tracked object $o_k^{(t-1)}$ (i.e., when a tracked object $o_k^{(t-1)}$ has a greatest concatenated similarity with a

detected object $\mathbf{b}_i^{(t)}$ ), the i-th object may correspond to trajectory information of the k-th object at a time point t. The matching module 240 may obtain trajectory information (e.g., $\mathbf{o}_k^{(t)}$ ) by associating $\mathbf{b}_i^{(t)}$ and $\mathbf{o}_k^{(t-1)}$ . For example, in a case where there is no tracked object that matches a detected object (i.e., there is no tracked object having a concatenated similarity greater than a threshold value), the detected object may be a newly appearing object, and in this case, it may be managed as trajectory information of the newly appearing object.

Based on the matching result between the detected object and the tracked object, the electronic device 100 may update the trajectory information. The electronic device 100 may update a trajectory set (e.g., O$^{(t-1)}$) to a trajectory set (e.g., O$^{(t)}$) based on the updated trajectory information.

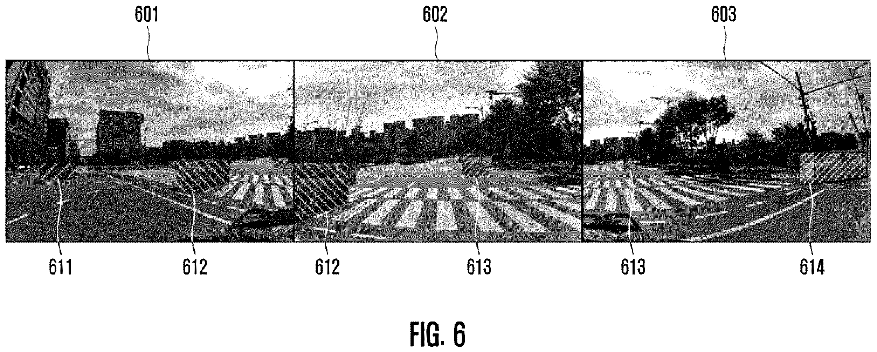

FIG. 6 is a diagram illustrating multi-object tracking in an autonomous driving system according to an example embodiment.

Referring to FIG. 6, shown are example image frames (e.g., 601, 602, and 603) obtained by an autonomous driving system according to an example embodiment. An electronic device (e.g., the electronic device 100 of FIG. 1) may process the image frames 601, 602, and 603. The electronic device 100 may be implemented as part of an autonomous driving device, which may be provided (e.g., mounted on or included in) an autonomous vehicle. Each of the image frames 601, 602, and 603 may be data obtained from cameras of the autonomous vehicle.

In the image frame 601, objects 611 and 612 may be identified. In the image frame 602, objects 612 and 613 may be identified. In the image frame 603, objects 613 and 614 may be identified. Referring to the identified objects, it may be verified that an overlap region between the image frames may not be large due to the camera placement of the autonomous vehicle. In this case where the overlap region between the image frames is not large, a ReID embedding module (e.g., the ReID embedding module 220 of FIG. 2) may be used to improve multi-object tracking performance. Using the ReID embedding module, the electronic device 100 may perform multi-object tracking suitable for the autonomous driving system in cases where an overlap region between image frames is not large. Further, the electronic device 100 may use a neural network model for multi-object tracking to consider both an external appearance of an object and a motion of the object. The electronic device 100 may thus accurately track multiple objects with varying motions and/or similar appearances.

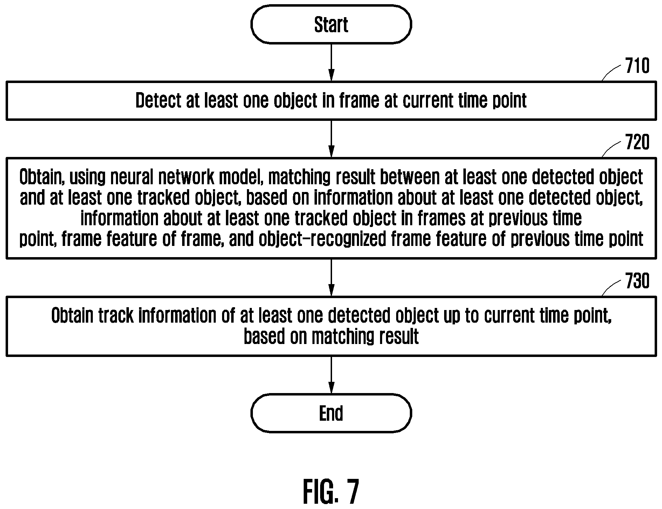

FIG. 7 is a flowchart illustrating an operating method of an electronic device according to an example embodiment.

Referring to FIG. 7, according to an example embodiment, operations 710 through 730 may be performed sequentially but are not limited thereto. For example, two or more of the operations may be performed in parallel.

At operation 710, an electronic device (e.g., the electronic device 100 of FIG. 1) may detect at least one object in a frame at a current time point.

At operation 720, the electronic device 100 may obtain, using a neural network model, a matching result between the at least one detected object and at least one object tracked in frames at a previous time point that precedes the current time point, based on information about the at least one detected object, information about the at least one tracked object, a frame feature of the frame, and an object-recognized frame feature of the previous time point.

At operation 730, the electronic device 100 may obtain trajectory information of the at least one detected object up to the current time point, based on the matching result.

The example embodiments described herein may be implemented using hardware components, software components and/or combinations thereof. A processing device may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For simplicity, the description of a processing device is used as singular; however, one skilled in the art will be appreciated that a processing device may include multiple processing elements and multiple types of processing elements. For example, a processing device may include multiple processors or a processor and a controller. In addition, different processing configurations are possible, such as, parallel processors.

The software may include a computer program, a piece of code, an instruction, or some combination thereof, to independently or collectively instruct or configure the processing device to operate as desired. The software and/or data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as ROM, RAM, flash memory (e.g., USB flash drives, memory cards, memory sticks, etc.), and the like. Examples of program instructions include both machine code, such as produced by a compiler, and files containing higher-level code that may be executed by the computer using an interpreter.

The above-described hardware devices may be configured to act as one or more software modules in order to perform the operations of the above-described examples, or vice versa.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

## Claims

1. An operating method of an electronic device, comprising:

   detecting at least one object in a frame at a current time point;
   obtaining, using a neural network model, a matching result between the at least one detected object and at least one object tracked in frames at a previous time point that precedes the current time point, based on information about the at least one detected object, information about the at least one tracked object, a frame feature of the frame, and an object-recognized frame feature of the previous time point; and
   obtaining trajectory information of the at least one detected object up to the current time point, based on the matching result.

2. The operating method of claim 1, wherein the neural network model comprises:

   a transformer configured to output an object-recognized frame feature of the current time point, based on the frame feature and the object-recognized frame feature of the previous time point;
   a re-identification (ReID) embedding module configured to output a ReID feature of the at least one detected object, based on the object-recognized frame feature of the current time point and the object-recognized frame feature of the previous time point;
   a motion estimation module configured to output a heatmap comprising information about a position estimated at the current time point for each of the at least one tracked object, based on the object-recognized frame feature of the current time point and the object-recognized frame feature of the previous time point; and
   a matching module configured to match the at least one detected object and the at least one tracked object, based on the information about the at least one tracked object, the information about the at least one detected object, the ReID feature, and the heatmap.

3. The operating method of claim 2, wherein the transformer is configured to:

   obtain first feature matrices based on the object-recognized frame feature of the previous time point;
   obtain a second feature matrix based on the frame feature; and
   output the object-recognized frame feature of the current time point, based on the first feature matrices, the second feature matrix, and the frame feature.

**4.** The operating method of claim 3, wherein the transformer is configured to:

obtain a first object feature by performing a region-of-interest alignment (ROI Align) on the at least one tracked object on the object-recognized frame feature of the previous time point; and
obtain the first feature matrices based on the first object feature.

**5.** The operating method of claim 3, wherein the transformer is configured to:

obtain a fused object feature from the first feature matrices and the second feature matrix, based on a cross-attention layer; and
output the object-recognized frame feature of the current time point, based on the fused object feature and the frame feature.

**6.** The operating method of claim 2, wherein the ReID embedding module is configured to:

obtain first feature matrices based on the object-recognized frame feature of the previous time point;
obtain a third feature matrix based on the object-recognized frame feature of the current time point; and
output the ReID feature of the at least one detected object, based on the first feature matrices and the third feature matrix.

**7.** The operating method of claim 6, wherein the ReID embedding module is configured to:

obtain a second object feature by performing ROI Align on the at least one detected object on the object-recognized frame feature of the current time point; and
obtain the third feature matrix based on the second object feature.

**8.** The operating method of claim 2, wherein the motion estimation module is configured to:

obtain a third object feature based on the object-recognized frame feature of the previous time point;
obtain a fourth object feature based on the object-recognized frame feature of the current time point; and
output the heatmap based on the third object feature and the fourth object feature.

**9.** The operating method of claim 8, wherein the motion estimation module is configured to:

obtain the fourth object feature by performing ROI Align on a search region on the object-recognized frame feature of the current time point,
wherein the search region is obtained by adjusting a scale of a bounding box of the at least one detected object.

**10.** The operating method of claim 2, wherein the matching module is configured to:

calculate a first similarity between the at least one tracked object and the at least one detected object, based on the ReID feature;
calculate a second similarity between the at least one tracked object and the at least one detected object, based on the information about the position estimated at the current time point for each of the at least one tracked object, the information comprised in the heatmap; and
output the matching result based on a weighted sum of the first similarity and the second similarity.

**11.** The operating method of claim 10, wherein the first similarity is based on a bidirectional softmax similarity and cosine similarity between a ReID feature of the current time point and a ReID feature of the previous time point.

**12.** A non-transitory computer-readable storage medium storing instructions that, when executed by a processor, cause the processor to perform the operating method of any one of claims 1 to 11.

**13.** An electronic device, comprising:

a processor; and
a memory storing instructions,
wherein, when executed by the processor, the instructions cause the electronic device to:

detect at least one object in a frame at a current time point;

obtain, using a neural network model, a matching result between the at least one detected object and at least one object tracked in frames at a previous time point that precedes the current time point, based on information about the at least one detected object, information about the at least one tracked object, a frame feature of the frame, and an object-recognized frame feature of the previous time point; and

obtain trajectory information of the at least one detected object up to the current time point, based on the matching result.

Electronic device 100

Processor
110

Memory
120

FIG. 1

FIG. 2

FIG. 3

**FIG. 4**

205-1

502

RolAlign

$Q^{(t-1)}$

$F_O^{(t-1)}$

521

Cross-correlation

Conv

$H^{(t)}$

211

RolAlign

512

$S^{(t)}$

$F_O^{(t)}$

**FIG. 5**

FIG. 6

Start

710

Detect at least one object in frame at current time point

720

Obtain, using neural network model, matching result between at least one detected object and at least one tracked object, based on information about at least one detected object, information about at least one tracked object in frames at previous time point, frame feature of frame, and object-recognized frame feature of previous time point

730

Obtain track information of at least one detected object up to current time point, based on matching result

End

FIG. 7

Europäisches
Patentamt

European
Patent Office

Office européen
des brevets

# EUROPEAN SEARCH REPORT

**Application Number**

EP 24 21 5375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM HYUNSEOP ET AL: "Joint Appearance and Motion Model With Temporal Transformer for Multiple Object Tracking", IEEE ACCESS, [Online] vol. 11, 16 November 2023 (2023-11-16), pages 133792-133803, XP093260721, USA ISSN: 2169-3536, DOI: 10.1109/ACCESS.2023.3333366 Retrieved from the Internet: URL:https://doi.org/10.1109/ACCESS.2023.3333366> [retrieved on 2025-03-18] * abstract * * page 133794, column 1, line 12 - line 16 * * section III * * figures 2-5 * | 1-13 | INV. G06V10/25 G06T7/20 G06V10/62 G06V10/74 G06V10/80 G06V10/82 G06V20/52 |

-----

| TECHNICAL FIELDS SEARCHED (IPC) |
|---|
| G06V G06T |

The present search report has been drawn up for all claims

| Place of search | Date of completion of the search | Examiner |
|---|---|---|
| The Hague | 20 March 2025 | De Coi, Juri |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   & : member of the same patent family, corresponding
   document

EPO FORM 1503 03.82 (P04C01)